# EUROPÄISCHE PATENTSCHRIFT

(11) **EP 4 118 348 B1**
(45) Veröffentlichungstag und Bekanntmachung des Hinweises auf die Patenterteilung: **20.09.2023**
(21) Anmeldenummer: 21701656.7
(22) Anmeldetag: 18.01.2021
(51) Int. Cl.: F16C 11/06, F16C 11/12, F16C 33/46, F16C 19/46, F16C 19/50, F16C 33/30

(54) **SCHWENKWIEGENLAGERUNG UND VERFAHREN ZUR HERSTELLUNG EINER SYNCHRONISATONSVORRICHTUNG EINER SCHWENKWIEGENLAGERUNG**
PIVOT CRADLE BEARING SYSTEM AND METHOD FOR PRODUCING A SYNCHRONISATION DEVICE OF A PIVOT CRADLE BEARING SYSTEM
SYSTÈME DE PALIER À BERCEAU PIVOTANT ET PROCÉDÉ DE FABRICATION D'UN DISPOSITIF DE SYNCHRONISATION D'UN SYSTÈME DE PALIER À BERCEAU PIVOTANT

(30) Priorität: 13.03.2020 DE 102020106907
(43) Veröffentlichungstag der Anmeldung: 18.01.2023
(73) Patentinhaber: Schaeffler Technologies AG & Co. KG, 91074 Herzogenaurach (DE)
(72) Erfinder: KRAMAR, Vasyl, 97508 Grettstadt (DE)
(86) Internationale Anmeldenummer: PCT/DE2021/100052
(87) Internationale Veröffentlichungsnummer: WO 2021/180262

(56) Entgegenhaltungen:
- US-A- 5 630 352

## Beschreibung

Die Erfindung betrifft eine für die Verwendung in einer Axialkolbenmaschine geeignete Schwenkwiegenlagerung nach dem Oberbegriff des Anspruchs 1. Ferner betrifft die Erfindung ein Verfahren zur Herstellung einer Synchronisationsvorrichtung einer Schwenkwiegenlagerung, wobei durch die Synchronisationsvorrichtung Bewegungen eines Wälzkörper, insbesondere Zylinderrollen, führenden Käfigsegments einer Schwenkwiegenlagerung mit den Schwenkbewegungen einer Schwenkwiege synchronisiert werden.

Eine gattungsgemäße Schwenkwiegenlagerung für eine hydraulische Axialkolbenmaschine ist beispielsweise aus der DE 25 21 312 B1 bekannt. Mit Hilfe der bekannten Schwenkwiegenlagerung kann eine Schrägscheibe, das heißt Schwenkwiege, in veränderbarer Winkelstellung in einem Gehäuse gelagert werden. Durch Verstellung der Winkellage der Schrägscheibe verändert sich der Hub von Kolben der Axialkolbenmaschine. Das bekannte Schrägscheiben-Schwenklager umfasst Rollen als Wälzkörper, welche in einem Käfig geführt sind. An dem Käfig ist ein sich etwa radial zur Krümmung des bogenförmigen Käfigs erstreckender Stab schwenkbar angelenkt, wobei der Stab im Fall der DE 25 21 312 B1 gegenüber dem Käfig zusätzlich radial verschieblich ist. Der Stab ist mit seinem einen Ende ortsfest an einer Stelle des Gehäuses schwenkbar gelagert und mit seinem anderen Ende an der Schrägscheibe schwenkbar und in seiner Längsrichtung verschiebbar angeordnet. Jeder Verschwenkung der Schrägscheibe ist damit eine Verlagerung des Käfigs zugeordnet, womit insgesamt eine Synchronisationsvorrichtung gegeben ist.

Eine weitere Axialkolbenmaschine mit einem Schwenklager ist in der DE 10 2006 023 711 A1 beschrieben. In diesem Fall ist ein Käfigsegment durch ein winkelförmiges Führungselement geführt, welches drehbar und verschiebbar am Käfigsegment gelagert ist und zwei Führungsschenkel aufweist, die an den relativ zueinander verschwenkbaren Teilen auf verschiedene Weise angehängt sind.

Eine weitere Nachführeinrichtung für einen Käfig eines Segmentwälzlagers einer Wiege, das heißt einer Schwenkwiegenlagerung, ist in der DE 34 42 391 C1 offenbart. Die Nachführeinrichtung umfasst zwei Führungsnuten, wobei ein Führungsglied in einer Kreuzungsstelle der Führungsnuten geführt ist.

Schrägscheiben-Schwenklager mit Kulissensteuerungen zur Synchronisation der Käfigbewegung mit der Schwenkbewegung eines Lagerteils sind auch in den Dokumenten DE 10 2006 023 711 A1, DE 10 2009 013 094 B4, DE 10 2012 202 742 B3 und DE 10 2017 126 525 A1 beschrieben.

Diverse Gestaltungsmöglichkeiten von Käfigen von Schwenkwiegenlagerungen gehen aus den Dokumenten DE 87 05 446 U1, DE 10 2005 034 739 A1 und DE 10 2014 206 803 B3 hervor.

Eine Schwenkwiegenlagerung, bei der die Bewegung eines Käfigs durch Anschläge begrenzt ist, ist in der DE 10 2017 126 525 A1 beschrieben.

Komplette Axialkolbenmaschinen einschließlich Schwenkwiegenlagerung sind zum Beispiel in den Dokumenten DE 199 60 941 A1 und DE 10 2013 210 070 B3 beschrieben.

Die DE 10 2019 108 657 A1 offenbart eine Wälzlageranordnung, bei welcher ein Schwenkhebel mittels einer Schwenkhebelführung am Käfig fixiert ist, wobei die Schwenkhebelführung mittels einer Schnapp-Rast-Verbindung am Käfig befestigt ist.

Der Erfindung liegt die Aufgabe zugrunde, eine Schwenkwiegenlagerung mit synchronisiertem Käfig gegenüber dem genannten Stand der Technik insbesondere unter fertigungstechnischen Aspekten weiterzuentwickeln.

Diese Aufgabe wird erfindungsgemäß durch eine Schwenkwiegenlagerung mit den Merkmalen des Anspruchs 1. Ebenso wird die Aufgabe gelöst durch ein Verfahren zur Herstellung einer Synchronisationsvorrichtung gemäß Anspruch 9. Im Folgenden im Zusammenhang mit dem Herstellungsverfahren erläuterte Ausgestaltungen und Vorteile der Erfindung gelten sinngemäß auch für die Vorrichtung, das heißt die Schwenkwiegenlagerung, und umgekehrt.

Die Schwenkwiegenlagerung umfasst in an sich bekannter Grundkonzeption ein gebogenes Käfigsegment, in welchem Wälzkörper, insbesondere Zylinderrollen, geführt sind, die zwischen zwei gegeneinander verschwenkbaren Lagerteilen abrollen, wobei eine Synchronisationsvorrichtung, die zur Synchronisation der Relativbewegung der Lagerteile mit der Verlagerung des Käfigsegments ausgebildet ist, einen Schwenkhebel umfasst, der im Käfigsegment gelagert ist. Erfindungsgemäß ist zur Lagerung des Schwenkhebels im Käfigsegment ein Gelenklager vorgesehen ist, durch welches eine Schnappverbindung gebildet ist.

Durch den Entfall von zusätzlichen Mitteln zur Halterung des Schwenkhebels im Käfigsegment ist die Synchronisationsvorrichtung besonders rationell montierbar. Es hat sich gezeigt, dass selbst bei Schwenkwiegenlagerungen in Axialkolbenmaschinen, in denen sehr hohe Kräfte wirken, auf diese Weise eine dauerhaft stabile Lagerung des Schwenkhebels im Käfigsegment gegeben ist.

In bevorzugter Ausgestaltung wird das Gleitlageraußenstück des zugleich eine Schnappverbindung bildenden Gelenklagers unmittelbar durch das Käfigsegment bereitgestellt, wobei durch das Gleitlageraußenstück eine Federanordnung gebildet ist. Diese Federanordnung umfasst vorzugsweise mehrere insgesamt ringförmig angeordnete, zur Kontaktierung des Schwenkhebels vorgesehene Federzungen, welche jeweils durch eine Nut voneinander getrennt sind. Die gesamte Federanordnung ist einstückig mit einer durch das Käfigsegment gebildeten Lagerplatte, in welcher sich das Gelenklager befindet, ausgebildet.

Gemäß einer ersten möglichen Variante sind die Federzungen von einer einzigen, in die Lagerplatte eingeformten Ringnut umgeben, wobei die Federzungen nicht über die Lagerplatte hinausragen. Gemäß einer alternativen Variante sind die Federzungen als von der Lagerplatte abstehende, das heißt über die Lagerplatte hinausragende, Erhebungen ausgebildet. In diesem Fall sind innerhalb der Lagerplatte im Gegensatz zur ersten Variante vorzugsweise keine federnden Strukturen ausgebildet. In beiden Fällen stellt die Lagerplatte einen integralen Bestandteil des Käfigsegments dar, wobei das Außenteil des Gelenklagers durch die Lagerplatte gebildet ist.

Die Anzahl der Federzungen unterliegt keinen prinzipiellen Beschränkungen. Beispielsweise ist die Federanordnung durch drei, vier oder sechs Federzungen gebildet, welche sich - lässt man die zwischen den Federzungen frei gehaltenen Nuten außer Acht - in insgesamt ringförmiger Anordnung jeweils über einen Winkel von etwa, 120 Grad, 90 Grad beziehungsweise 60 Grad erstrecken.

Die Federzungen, welche unmittelbar aus dem Werkstoff des Käfigsegments geformt sind, sind in bevorzugter Ausgestaltung radial nach außen, bezogen auf die Schwenkachse der Schwenkwiegenlagerung, gerichtet. Jede Federzunge ist entsprechend der sphärischen Form des Gleitlagerinnenteils gekrümmt, so dass sich bei zusammengesetzter Schnappverbindung eine kugelige Überdeckung ergibt. Die Federzungen schließen vorzugsweise unmittelbar an eine nicht unterbrochene Gleitfläche des Gleitlageraußenteils an.

Unabhängig davon, ob die Federzungen radial nach außen oder radial nach innen, das heißt in Richtung zur Schwenkachse der Schwenkwiegenlagerung, ausgerichtet sind, können die Federzungen in besonders raumsparender Weise gemäß der bereits erläuterten ersten Variante innerhalb des Querschnitts der Lagerplatte angeordnet sein. Dies bedeutet, dass sich jede einzelne Federzunge in Radialrichtung nur über einen Teil der Dicke der Lagerplatte erstreckt. Die bereits genannte Gleitfläche des Gleitlageraußenteils erstreckt sich über den restlichen Teil der Dicke der Lagerplatte. Bei Gestaltung der Federanordnung gemäß der zweiten Variante steht dagegen die gesamte Dicke der Lagerplatte zur Bildung der Gleitfläche des Gleitlageraußenteils zur Verfügung.

Das Käfigsegment einschließlich der Lagerplatte ist vorzugsweise aus Kunststoff gefertigt. Im Unterschied hierzu ist der Schwenkhebel einschließlich des Gleitlagerinnenstücks des Gelenklagers vorzugsweise aus Metall gefertigt.

Die Synchronisationsvorrichtung der Schwenkwiegenlagerung ist in folgenden Schritten herstellbar:
- Bereitstellung eines zur Führung von Wälzkörpern, insbesondere Zylinderrollen, vorgesehenen Käfigsegments, welches eine Lagerplatte aufweist, durch die ein Gleitlageraußenstück gebildet ist,
- Bereitstellung eines vorzugsweise einstückigen, aus Metall gefertigten Schwenkhebels, welcher eine von seinen Enden beabstandete sphärische Verdickung als Gleitlagerinnenstück aufweist, wobei der Durchmesser des Gleitlagerinnenstücks größer als der minimale Innendurchmesser des Gleitlageraußenstücks ist,
- Einsetzen des Schwenkhebels in das Käfigsegment, wobei das Gleitlageraußenstück elastisch aufgeweitet wird und das Gleitlagerinnenstück in das Gleitlageraußenstück einschnappt, das heißt eine Schnappverbindung zwischen dem Käfigsegment und dem Schwenkhebel hergestellt wird.

Der Schwenkhebel ist, abhängig insbesondere von der geometrischen Gestaltung des Gleitlageraußenstücks, entweder von innen nach außen oder von außen nach innen in das Käfigsegment einsetzbar. In bevorzugter Ausgestaltung ist ein Einsetzen des Schwenkhebels von außen nach innen vorgesehen, wobei sich die hierbei auftretende Verschiebung des Schwenkhebels radial nach innen auf die Schwenkachse der Schwenkwiegenlagerung bezieht.

Die Schnappverbindung zwischen dem Käfigsegment und dem Schwenkhebel ist vorzugsweise derart gestaltet, dass die Synchronisationsvorrichtung nicht nur auf einfache Weise, unter Anwendung moderater Kräfte montierbar, sondern bei Bedarf auch zerstörungsfrei demontierbar ist. Im bestimmungsgemäßen Betrieb einer Axialkolbenmaschine, welche die Schwenkwiegenlagerung umfasst, zeichnet sich das als Schnappverbindung ausgebildete Gelenklager durch eine hohe radiale Belastbarkeit und zugleich eine ausreichend hohe Belastbarkeit in beiden Axialrichtungen, bezogen auf die Längsachse des Schwenkhebels, aus.

Nachfolgend werden zwei Ausführungsbeispiele der Erfindung anhand einer Zeichnung näher erläutert. Hierin zeigen:
- Fig. 1: in einer Explosionsdarstellung Komponenten eines ersten Ausführungsbeispiels einer Schwenkwiegenlagerung,
- Fig. 2: eine Synchronisationsvorrichtung der Schwenkwiegenlagerung nach Fig. 1 in geschnittener Darstellung,

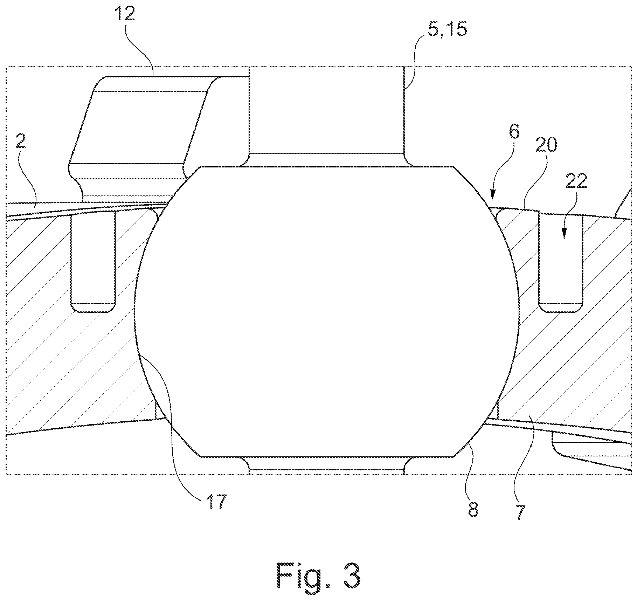

- Fig. 3: ein Detail der Anordnung nach Fig. 2,
- Fig. 4: ein Käfigsegment eines zweiten Ausführungsbeispiels einer Schwenkwiegenlagerung,
- Fig. 5: ein Detail der das Käfigsegment nach Fig. 4 aufweisenden Schwenkwiegenlagerung.

Die folgenden Erläuterungen beziehen sich, soweit nicht anders angegeben, auf beide Ausführungsbeispiele. Einander entsprechende oder prinzipiell gleichwirkende Teile sind in allen Figuren mit den gleichen Bezugszeichen gekennzeichnet.

Eine lediglich ausschnittsweise dargestellte Schwenkwiegenlagerung 1 umfasst ein gekrümmtes Käfigsegment 2 aus Kunststoff, in welchem nicht dargestellte Wälzkörper, nämlich Zylinderrollen, in Käfigtaschen 3 geführt sind. Die Wälzkörper kontaktieren im fertig montierten Zustand der Schwenkwiegenlagerung 1 eine Schwenkwiege und ein Gehäuse als relativ zueinander verschwenkbare Lagerteile. Die Schwenkwiegenlagerung 1 ist Teil einer nicht weiter dargestellten Axialkolbenmaschine, das heißt einer Axialkolbenpumpe oder eines Axialkolbenmotors. Mit Hilfe der Schwenkwiegenlagerung 1 kann der Volumenstrom durch die Axialkolbenmaschine beeinflusst werden. Hinsichtlich des prinzipiellen Aufbaus und der Funktion der Schwenkwiegenlagerung 1 wird auf den eingangs zitierten Stand der Technik verwiesen.

Der Schwenkwiegenlagerung 1 ist eine insgesamt mit 4 bezeichnete Synchronisationsvorrichtung zuzurechnen, die dafür sorgt, dass die Verschwenkung des Käfigsegments 2 auf die Relativbewegung zwischen den zueinander verstellbaren Lagerteilen abgestimmt ist. Die Synchronisationsvorrichtung 4 umfasst einen Schwenkhebel 5, der im Käfigsegment 2 gelagert ist. Hierbei ist durch den Schwenkhebel 5 und das Käfigsegment 2 ein Gleitlager, nämlich Gelenklager 6, ausgebildet. Das Gelenklager 6 ist gebildet durch ein Gleitlagerinnenstück 8, welches unmittelbar durch den Schwenkhebel 5 bereitgestellt wird, und ein Gleitlageraußenstück 7, welches durch eine Lagerplatte 9 des Käfigsegments 2 bereitgestellt wird. Die Lagerplatte 9 ist entsprechend der Krümmung des Käfigsegments 2 leicht gekrümmt und geht in eine Käfigleiste 10 über. Die Käfigleiste 10 ist über Stege 12 mit einer weiteren Käfigleiste 11 verbunden, wobei jeweils zwischen zwei in Umfangsrichtung benachbarten Stegen 12 eine Käfigtasche 3 gebildet ist. Die Stege 12 sind parallel zur Schwenkachse der Schwenkwiegenlagerung 1 ausgerichtet. Insgesamt handelt es sich bei dem Käfigsegment 2 damit um ein einstückiges Kunststoffteil.

Das durch den Schwenkhebel 5 gebildete Gleitlagerinnenstück 8 wird auch als Gelenkkugel bezeichnet. Weiterhin weist der Schwenkhebel 5 an seinen beiden Enden jeweils eine Endkugel 13, 14 auf. Die radial innerhalb des Käfigsegments 2 angeordnete Gelenkkugel 13, das heißt diejenige Endkugel 13, die geringer als das Käfigsegment 2 von der Schwenkachse der Schwenkwiegenlagerung 1 beabstandet ist, weist einen geringeren Abstand von der Gelenkkugel 8 als die äußere Endkugel 14 auf. Dies ist gleichbedeutend damit, dass ein außenliegender Arm 15 des Schwenkhebels 5 länger ist als ein innenliegender Arm 16. Die Länge der Arme 15, 16 wird jeweils ausgehend vom Mittelpunkt des Gelenklagers 6, das heißt vom Mittelpunkt des sphärischen Gleitlagerinnenstück 8, gemessen.

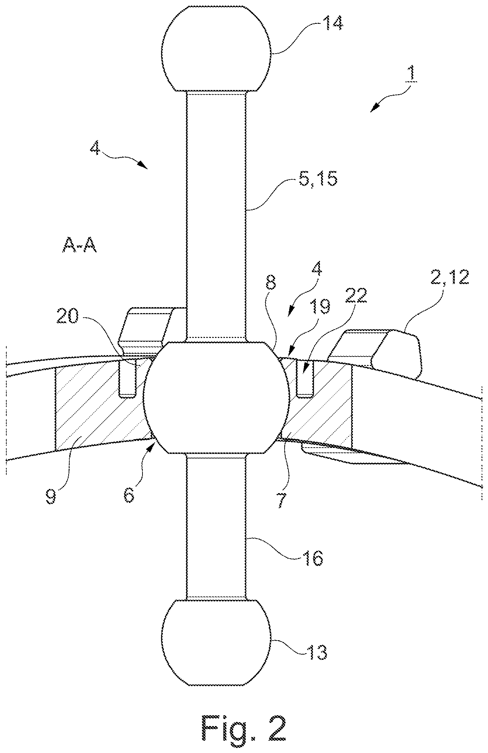

Das Gleitlagerinnenstück 8 ist symmetrisch zu einer gedachten Ebene, in welcher der Mittelpunkt des Gleitlagerinnenstück 8 liegt und zu welcher die Längsachse des Schwenkhebels 5 - bezogen auf seine Anordnung gemäß Fig. 2 - eine Flächennormale darstellt, ausgebildet. Im Unterschied hierzu ist das Gleitlageraußenstück 7 unsymmetrisch zu dieser durch das Gelenklager 6 gelegten Ebene ausgebildet: Ein innerer Abschnitt 17 des Gleitlageraußenstücks 7 stellt eine nicht unterbrochene Gleitfläche bereit. An den inneren Abschnitt 17 schließt sich radial nach außen - bezogen auf die Schwenkachse der Schwenkwiegenlagerung 1 - eine Federanordnung 18 an, durch welche eine segmentierte Gleitfläche bereitgestellt wird.

Die Federanordnung 18 ist Teil einer insgesamt mit 19 bezeichneten Schnappverbindung, welche zwischen dem Käfigsegment 2 und dem Schwenkhebel 2 hergestellt ist. Als integraler Bestandteil der Lagerplatte 9 und damit des gesamten Käfigsegments 2 umfasst die Federanordnung 18 in beiden Ausführungsbeispielen vier Federzungen 20, welche sich, ausgehend vom inneren Abschnitt 17, radial nach außen erstrecken. Die Federzungen 20 beschreiben zusammen eine Ringform, wobei jeweils zwischen zwei Federzungen 20 eine Nut 21 erkennbar ist.

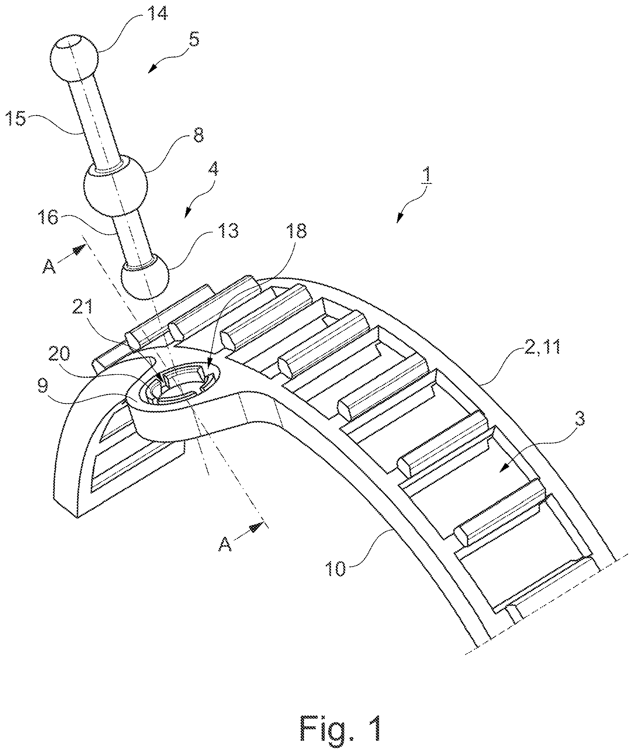

Im Ausführungsbeispiel nach Fig. 1 ist die ringförmige Federanordnung 18 von einer Ringnut 22 umgeben, welche bei der Montage eine Auslenkung der einzelnen Federzungen 20 ermöglicht. Die komplette Federanordnung 18 ist in diesem Fall zwischen der inneren und der äußeren, jeweils entsprechend dem Käfigsegment 2 gekrümmten Oberfläche der Lagerplatte 9 angeordnet.

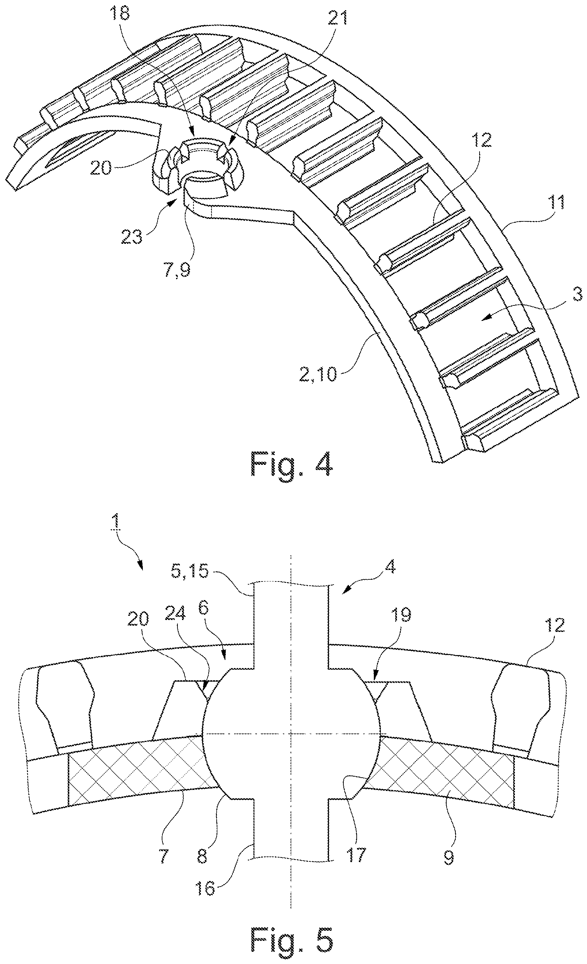

Im Unterschied hierzu ragen die Federzungen 20 im Ausführungsbeispiel nach Fig. 4 über die Lagerplatte 9 hinaus. In diesem Fall ist der durch die Lagerplatte 9 gebildete innere Abschnitt 17 des Gleitlageraußenstücks 7 durch einen Spalt 23 unterbrochen, so dass das Gleitlageraußenstück 7 eine offene Ringform, das heißt C-Form, beschreibt. Eine Ringnut an der Federanordnung 18 entfällt in diesem Fall. Auch in der Bauform nach Fig. 1 vorhandene Einführschrägen an den einzelnen Federzungen 20 sind mit 24 bezeichnet.

In beiden Ausführungsbeispielen wird der radial - bezogen auf die Schwenkachse der Schwenkwiegenlagerung 1 - ausgerichtete Schwenkhebel 5 von außen in das Gleitlageraußenstück 7 eingeschnappt. Bei Bedarf ist in umgekehrter Weise durch Herausziehen des Schwenkhebels 5 nach außen eine zerstörungsfreie Demontage der Synchronisationsvorrichtung 4 möglich. Die beiden Endkugeln 13, 14 haben einen geringeren Durchmesser als die Gelenkkugel 8 und behindern damit weder die Montage noch die Demontage des metallischen Schwenkhebels 5.

### Bezugszeichenliste

- 1: Schwenkwiegenlagerung
- 2: Käfigsegment
- 3: Käfigtasche
- 4: Synchronisationsvorrichtung
- 5: Schwenkhebel
- 6: Gelenklager
- 7: Gleitlageraußenstück
- 8: Gleitlagerinnenstück, Gelenkkugel
- 9: Lagerplatte
- 10: Käfigleiste
- 11: Käfigleiste
- 12: Steg
- 13: innere Endkugel
- 14: äußere Endkugel
- 15: außenliegender Arm
- 16: innenliegender Arm
- 17: innerer Abschnitt des Gleitlageraußenstücks
- 18: Federanordnung
- 19: Schnappverbindung
- 20: Federzunge
- 21: Nut
- 22: Ringnut

## Patentansprüche

1. Schwenkwiegenlagerung (1), mit einem gebogenen Käfigsegment (2), in welchem Wälzkörper geführt sind, die zwischen zwei gegeneinander verschwenkbaren Lagerteilen angeordnet sind, wobei eine Synchronisationsvorrichtung (4), die zur Synchronisation der Relativbewegung der Lagerteile mit der Verlagerung des Käfigsegments (2) ausgebildet ist, einen Schwenkhebel (5) umfasst, der im Käfigsegment (2) gelagert ist, **dadurch gekennzeichnet, dass** zur Lagerung des Schwenkhebels (5) im Käfigsegment (2) ein Gelenklager (6) vorgesehen ist, durch welches eine Schnappverbindung (19) gebildet ist.

2. Schwenkwiegenlagerung (1) nach Anspruch 1, **dadurch gekennzeichnet, dass** ein Gleitlageraußenstück (7) des Gelenklagers (6) unmittelbar durch das Käfigsegment (2) gebildet ist.

3. Schwenkwiegenlagerung (1) nach Anspruch 2, **dadurch gekennzeichnet, dass** durch das Gleitlageraußenstück (7) eine Federanordnung (18) gebildet ist.

4. Schwenkwiegenlagerung (1) nach Anspruch 3, **dadurch gekennzeichnet, dass** die Federanordnung (18) mehrere insgesamt ringförmig angeordnete Federzungen (20) umfasst, welche jeweils durch eine Nut (21) voneinander getrennt und einstückig mit einer durch das Käfigsegment (2) gebildeten Lagerplatte (9), in welcher sich das Gelenklager (6) befindet, ausgebildet sind.

5. Schwenkwiegenlagerung (1) nach Anspruch 4, **dadurch gekennzeichnet, dass** die Federzungen (20) von einer einzigen Ringnut (22) umgeben sind und nicht über die Lagerplatte (9) hinausragen.

6. Schwenkwiegenlagerung (1) nach Anspruch 4, **dadurch gekennzeichnet, dass** die Federzungen (20) als über die Lagerplatte (9) hinausragende Erhebungen ausgebildet sind.

7. Schwenkwiegenlagerung (1) nach Anspruch 5 oder 6, **dadurch gekennzeichnet, dass** die Federzungen (20) radial nach außen, bezogen auf die Schwenkachse der Schwenkwiegenlagerung (1), gerichtet sind.

8. Schwenkwiegenlagerung (1) nach einem der Ansprüche 1 bis 7, **dadurch gekennzeichnet, dass** das Käfigsegment (2) aus Kunststoff und der Schwenkhebel (5) einschließlich eines Gleitlagerinnenstücks (8) des Gelenklagers (6) aus Metall gefertigt ist.

9. Verfahren zur Herstellung einer Synchronisationsvorrichtung (4) einer Schwenkwiegenlagerung (1), mit folgenden Schritten:
- Bereitstellung eines zur Führung von Wälzkörpern vorgesehenen Käfigsegments (2), welches eine Lagerplatte (9) aufweist, durch die ein Gleitlageraußenstück (7) gebildet ist,
- Bereitstellung eines Schwenkhebels (5), welcher eine von seinen Enden beabstandete sphärische Verdickung als Gleitlagerinnenstück (8) aufweist, wobei der Durchmesser des Gleitlagerinnenstücks (8) größer als der minimale Innendurchmesser des Gleitlageraußenstücks (7) ist,
- Einsetzen des Schwenkhebels (5) in das Käfigsegment (2), wobei das Gleitlageraußenstück (7) elastisch aufgeweitet wird und das Gleitlagerinnenstück (8) in das Gleitlageraußenstück (7) einschnappt.

10. Verfahren nach Anspruch 9, **dadurch gekennzeichnet, dass** der Schwenkhebel (5) von außen, bezogen auf die Schwenkachse der Schwenkwiegenlagerung (1), in das Gelenklager (6) eingeschnappt wird.

## Claims

1. A pivot cradle bearing (1) having a curved cage segment (2), in which rolling bodies are guided, which are arranged between two bearing parts which can be pivoted with respect to one another, wherein a synchronisation device (4), which is designed for synchronising the relative movement of the bearing parts with the displacement of the cage segment (2), comprises a pivoting lever (5), which is mounted in the cage segment (2), **characterised in that** an articulated bearing (6) is provided for mounting the pivoting lever (5) in the cage segment (2), by means of which a snap connection (19) is formed.

2. The pivot cradle bearing (1) according to claim 1, **characterised in that** an sliding bearing outer piece (7) of the articulated bearing (6) is formed directly by the cage segment (2).

3. The pivot cradle bearing (1) according to claim 2, **characterised in that** by means of the sliding bearing outer piece (7), a spring arrangement (18) is formed.

4. The pivot cradle bearing (1) according to claim 3, **characterised in that** the spring arrangement (18) comprises a plurality of spring tongues (20) arranged in an overall annular shape, which are each separated from each other by a groove (21) and are formed integrally with a bearing plate (9) formed by the cage segment (2), in which the articulated bearing (6) is located.

5. The pivot cradle bearing (1) according to claim 4, **characterised in that** the spring tongues (20) are surrounded by a single annular groove (22) and do not protrude beyond the bearing plate (9).

6. The pivot cradle bearing (1) according to claim 4, **characterised in that** the spring tongues (20) are designed as elevations projecting beyond the bearing plate (9).

7. The pivot cradle bearing (1) according to claim 5 or 6, **characterised in that** the spring tongues (20) are directed radially outwards, relative to the pivot axis of the pivot cradle bearing (1).

8. The pivot cradle bearing (1) according to any one of claims 1 to 7, **characterised in that** the cage segment (2) is made of plastic and the pivoting lever (5) including an inner sliding bearing piece (8) of the articulated bearing (6) is made of metal.

9. A method for producing a synchronisation device (4) of a pivot cradle bearing (1), having the following steps:
- providing a cage segment (2) intended for guiding rolling bodies, which has a bearing plate (9) through which a sliding bearing outer piece (7) is formed,
- providing a pivoting lever (5) which has a spherical thickening spaced apart from its ends as an sliding bearing inner piece (8), wherein the diameter of the sliding bearing inner piece (8) is greater than the minimum inner diameter of the sliding bearing outer piece (7),
- inserting the pivoting lever (5) into the cage segment (2), wherein the sliding bearing outer piece (7) is elastically expanded and the sliding bearing inner piece (8) snaps into the sliding bearing outer piece (7).

10. The method according to claim 9, **characterised in that** the pivoting lever (5) is snapped into the articulated bearing (6) from the outside in relation to the pivoting axis of the pivot cradle bearing (1).

## Revendications

1. Système de palier à berceau pivotant (1) avec un segment de cage incurvé (2) dans lequel sont guidés des éléments roulants qui sont agencés entre deux pièces de palier pouvant pivoter l'une par rapport à l'autre, un dispositif de synchronisation (4) destiné à synchroniser le mouvement relatif des pièces de palier avec le déplacement du segment de cage (2) étant formé, lequel comprend un levier pivotant (5) qui est monté dans le segment de cage (2), **caractérisé en ce que,** pour le rangement du levier pivotant (5) dans le segment de cage (2), un palier à rotule (6) est prévu, par lequel est formée une liaison par encliquetage (19).

2. Système de palier à berceau pivotant (1) selon la revendication 1, **caractérisé en ce qu'**une pièce extérieure à palier lisse (7) du palier à rotule (6) est formée directement par le segment de cage (2).

3. Système de palier à berceau pivotant (1) selon la revendication 2, **caractérisé en ce qu'**un dispositif à ressort (18) est formé par la pièce extérieure à palier lisse (7).

4. Système de palier à berceau pivotant (1) selon la revendication 3, **caractérisé en ce que** le dispositif à ressort (18) comprend une pluralité de languettes élastiques (20) disposées globalement en forme d'anneau, qui sont chacune séparées les unes des autres par une rainure (21) et sont formées d'une pièce avec une plaque d'appui (9) formée par le segment de cage (2) et dans laquelle se trouve le palier à rotule (6).

5. Système de palier à berceau pivotant (1) selon la revendication 4, **caractérisé en ce que** les languettes élastiques (20) sont entourées d'une seule rainure annulaire (22) et ne dépassent pas de la plaque d'appui (9).

6. Système de palier à berceau pivotant (1) selon la revendication 4, **caractérisé en ce que** les languettes élastiques (20) sont formées sous forme de bossages en saillie par rapport à la plaque d'appui (9).

7. Système de palier à berceau pivotant (1) selon la revendication 5 ou 6, **caractérisé en ce que** les languettes élastiques (20) sont dirigées radialement vers l'extérieur par rapport à l'axe de pivotement du système de palier à berceau pivotant (1).

8. Système de palier à berceau pivotant (1) selon l'une des revendications 1 à 7, **caractérisé en ce que** le segment de cage (2) est en plastique et le levier pivotant (5) comprenant une pièce intérieure à palier lisse (8) du palier à rotule (6) est en métal.

9. Procédé de fabrication d'un dispositif de synchronisation (4) d'un système de palier à berceau pivotant (1) comprenant les étapes suivantes :
- préparation d'un segment de cage (2) destiné au guidage d'éléments roulants, qui comporte une plaque d'appui (9) à travers laquelle est formée une pièce extérieure à palier lisse (7),
- préparation d'un levier pivotant (5) qui présente une surépaisseur sphérique espacée de ses extrémités en tant que pièce intérieure à palier lisse (8), le diamètre de la pièce intérieure à palier lisse (8) étant supérieur au diamètre intérieur minimal de la pièce extérieure à palier lisse (7),
- insertion du levier pivotant (5) dans le segment de cage (2), la pièce extérieure à palier lisse (7) se dilatant élastiquement et la pièce intérieure à palier lisse (8) s'encliquetant dans la pièce extérieure à palier lisse (7).

10. Procédé selon la revendication 9, **caractérisé en ce que** le levier pivotant (5) est encliqueté dans le palier à rotule (6) depuis l'extérieur par rapport à l'axe de pivotement du système de palier à berceau pivotant (1).
